Europäisches Patentamt

(19) European Patent Office

Office européen des brevets

(11) Publication number: **0 216 409 B1**

(12) **EUROPEAN PATENT SPECIFICATION**

(45) Date of publication of patent specification: **29.04.92**  (51) Int. Cl.⁵: **A21C 15/00**, B65G 47/51, B65G 1/137

(21) Application number: **86201444.6**

(22) Date of filing: **21.08.86**

(54) Method and equipment for mechanically discharging baked products, especially bakery products from an oven.

(30) Priority: **22.08.85 NL 8502309**

(43) Date of publication of application:
**01.04.87 Bulletin 87/14**

(45) Publication of the grant of the patent:
**29.04.92 Bulletin 92/18**

(84) Designated Contracting States:
**AT BE CH DE FR GB IT LI LU NL SE**

(56) References cited:
**WO-A-81/02563**
**US-A- 3 944 049**
**US-A- 4 231 470**

(73) Proprietor: **J.H. KAAK Holding B.V.**
**Varsseveldsewg 20a**
**NL-7061 GA Terborg(NL)**

(72) Inventor: **Kaak, Stephanus Willibrordus**
**Varsseveldseweg 20a**
**NL-7061 GA Terborg(NL)**

(74) Representative: **Kooy, Leendert Willem**
**OCTROOIBUREAU VRIESENDORP & GAADE**
**P.O. Box 266**
**NL-2501 AW The Hague(NL)**

Rank Xerox (UK) Business Services
(3.08/2.18/2.0)

## Description

The invention relates to equipment for cooling and mechanically conveying baked products between at least one oven and a location where the products are packed in a crate or similar container, comprising a central collecting track, a loading means adapted to transfer the products from the exit of the central collecting track to a buffer plant, and an unloading means adapted to transfer the products to other processing equipment adapted to transfer the products to a location where they are to be packed or wrapped. Such an equipment is known from US-A-3944049. The buffer plant of this known equipment is only capable of storing cooled products of one single type until they are led to other processing equipment embodied as a wrapping machine for individually packing the products. Such an equipment needs no improvement if the retailers wish to purchase such big quantities that the products can be delivered in a crate or container which is completely filled with one, possibly individually packed type of product. Problems arise, however, if the majority of the retailers wish to receive relatively small quantities of different products. Then intermediate storage becomes necessary and this involves much labour and high expenses.

Therefore, there is a huge demand for dispatch automation. The important parameters for dispatch automation of baked products are:

    a) the maximum quantity of the various types of products that have to be distributed in the course of one day,

    b) the quantity of each type of product,

    c) the point of time at which or the span of time in which these products are distributed.

The object of the invention now is to provide equipment reaching the desired automation result without ignoring the wishes and demands of the bakery retailers.

This object has basically been achieved by the characterizing features that the buffer plant comprises a plurality of cooling and storage tracks lying next to and above one another and extending parallel to one another, in that the loading means are each movable to a selected one of the cooling and storage tracks of the buffer plant, in that a return track, including switches at both ends, is provided between the exit of the unloading means and the entrance of the loading means, and in that the positions of the loading means and the unloading means as well as the positions of switches of a return belt are controlled by a computer which is adapted to process input data concerning the quantities and characteristics of each type of product to be delivered per retailer, said characteristics being not only related to cooling inside the buffer plant, but also to cutting and individual packing along the return belt.

The other equipment, such as a possible cutting device and individual packing machine, are thus partly situated along the return track between the exit of the unloading means and the entrance of the loading means. The other equipment embodied as a device to store products in a crate, will of course be situated at the discharge of the equipment.

If the quantities of some products to be delivered to several retailers are too small to reserve one complete track of the buffer plant for each of them, it is preferred to provide a sorting device above the top level of the buffer plant, said sorting device being arranged to transfer low quantity products to a collecting track.

Other advantages and details will become apparent to an expert from the description of the accompanying drawings in which

    Fig. 1 is a diagram of the production and packing procedures in a bakery and, deduced therefrom, the minimal buffer capacity required,

    Fig. 2 diagrammatically represents the lay-out of the equipment of the invention,

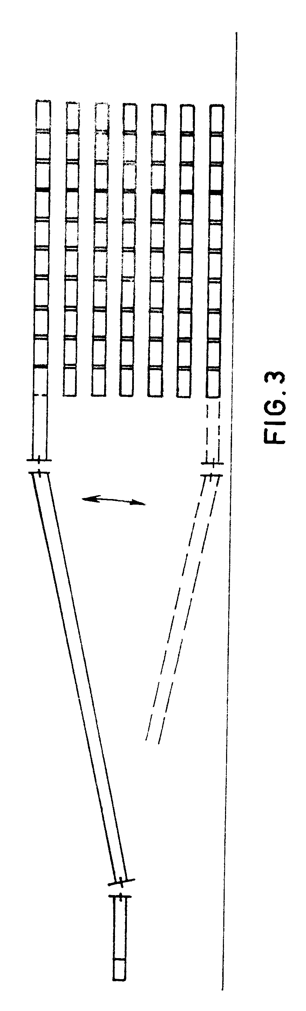

    Fig. 3 shows an enlarged sectional view according to line I-I in Fig. 2, and

    Fig. 4 diagrammatically represents the lay-out of another embodiment of the equipment.

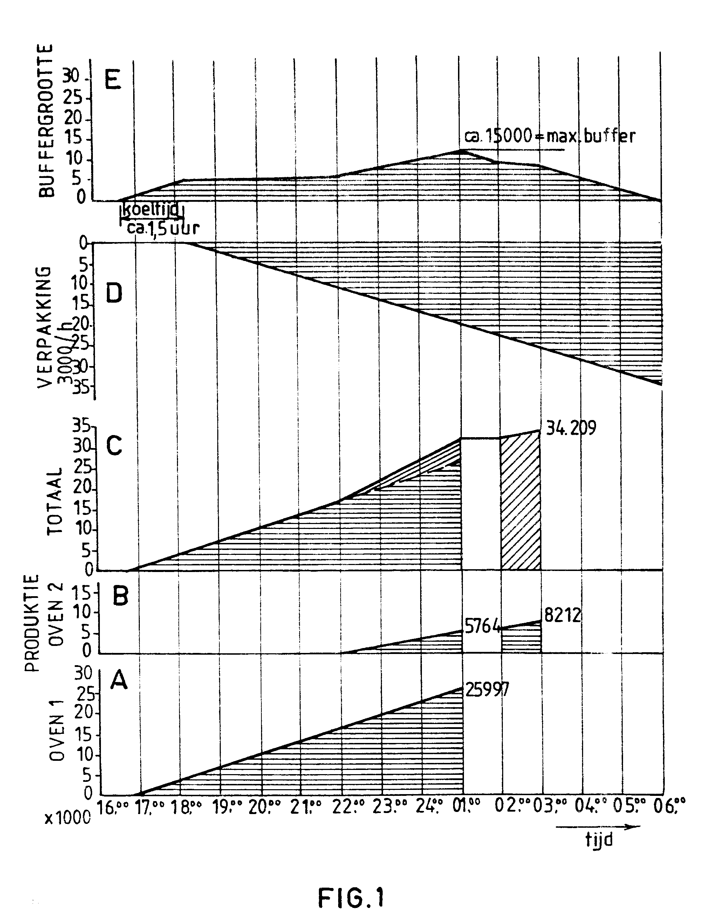

In Fig. 1 a method for calculating the minimum buffer capacity for a given production volume is schematically represented with the aid of time diagrams. The buffer capacity is to be based on the production of two ovens.

The horizontal axes of the diagrams indicate the hours, and the vertical axes indicate the number of processed units times one thousand during a predetermined period of time. Diagram A represents the production of oven 1 and diagram B represents the production of oven 2. In diagram C the total production of ovens 1 and 2 is cumulatively represented by superpositioning of graphs A and B. Diagram D cumulatively represents the number of packed units and diagram E represents the buffer capacity required at a given moment, the latter graph being obtained by subtracting graph D from graph C.

As can be read from diagram A, the production begins at 4.45 p.m. with oven 1 and about half an hour later the packing of the cooled products begins. Oven 1 ends production at 1.00 a.m.

As can be read from diagram B, the production of oven 2 starts at 22.00 p.m. and continues until 3.00 a.m. with an interval between 1.00 a.m. and 2.00 a.m.

The production of both ovens together, expressed in time, is represented in diagram C. From this it is apparent that at 3.00 a.m., at the end of the production time, a total quantity of 34,209 products has been produced and is therefore present in the factory. This quantity, however, must be completely packed and ready for dispatch by 6.00 a.m. This situation can be seen in diagram D. Here it has been assumend that 3,000 units are packed per hour, in other words that approximately eleven and a half hours are needed for packing. However, this is on the basis of a constant product supply as this cannot be realized otherwise. The packing of 3,000 products per hour by one person is possible in principle.

If one should substract diagrams C and D from one another, diagram E is obtained. With diagram E the buffer capacity that is necessary at any given moment can be determined; in this example the buffer capacity has reached its maximum value at 1.00 a.m. with approximately 15,000 products.

Now the minimal capacity of the equipment is known. By adding a safety factor one can settle minor irregularities that cannot be calculated in this theoretic approach.

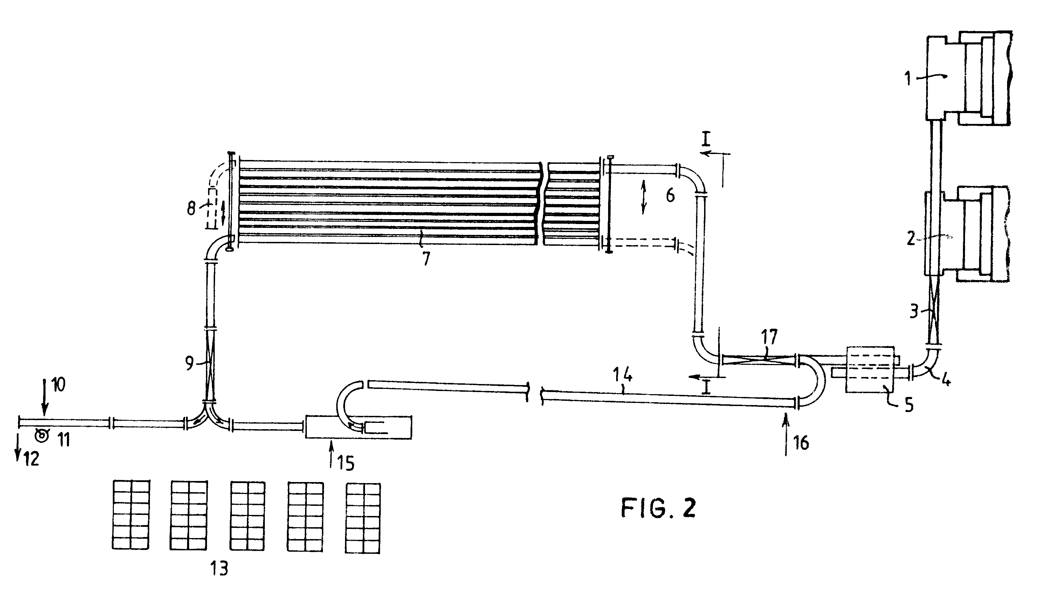

Fig. 2 shows an embodiment of the equipment comprising two ovens 1 and 2 from which the baked products are conveyed to the depanner 5 via a switch 3 and a central collecting track 4. In the depanner the products, still warm, are removed from their baking tins.

Then the products are conveyed to the buffer plant 7 via a loading means 6. This buffer plant comprises seven superposed rows of ten juxtaposed tracks, each track having an effective width of 325 mm and a length of 30 m. With this a total number of 70 tracks is obtained. The tracks are normal cool-down/conveying tracks like those used in the known "multiway tracksystem" of applicant.

This buffer plant 7 can fulfil various functions. It can be used to cool-down the newly baked products, for storage of the cooled, unpacked products, for storage of products that have undergone further treatment like cutting and/or individual packing, for storage of assorted products and so on. This storage possibility generates a buffer effect that can be used to bridge the time difference between the actual baking and the completion of the retailer's orders on the one hand, and that allows to temporarily suspend the production flow on the other hand, for example during the time in which the paper in a packing machine has to be changed or in case of a breakdown.

Here it should be remarked that cooling-down does not always have to be an essential function of the buffer plant. There are many fields of application in which buffering is interesting in itself.

By feeding production data into the memory of a computer, the tracks on which the various products may be found in the buffer plant can be recorded precisely. To this end all tracks may be multi-functional but the plant may also be subdivided into different groups of tracks, each group fulfilling an individual function and being adapted solely for the cooling-down of products, for example, or for the storage of individually packed products only or for the storage of all products ordered by one retailer, etc.

At the entrance of the buffer plant the special loading means 6 has been provided, which can be driven by means of central computer control and via a selector pannel towards a certain track of the buffer plant 7 or in sequence towards different tracks thereof, one outer end of the loading means being movable in horizontal and in vertical direction and the other outer end of the loading means being connected to:

    a) the track starting from the depanner with warm products

and, possibly simultaneously, to

    b) the track starting from a packing machine with packed products.

By bringing the capacity of the loading means and of the pertaining belt system up to approximately 6,000-7,000 products an hour, it is possible to load the buffer plant

    a) from the depanner, or

    b) from the packing machine, or

    c) from both the depanner and the packing machine at the same time

via interpositioned storage tracks.

The loading takes place in such a way that the loading means leads to one track and delivers the complete, arrived production of one type of product until the said track is filled. Should the second oven or the packing machine be switched on as well in the meantime, then the loading means will ensure that it leads to another track if it holds another product (a packed product is never the same as an unpacked product). The presence of only one type of product on each track is achieved with this. Of course several tracks may contain the same product. Care should be taken not to place more than one type of product on the track.

The exit of the buffer plant is provided with a construction similar to that of the entrance; however, this construction is an unloading means 8. This unloading means is connected by a switch 9 to:

    a) a place 12 where the products are packed in crates or containers,

or

    b) a supply 15 leading to the cutting machine and/or the packing machines.

Via the central distribution control the production for the different retailers is now called for; to this end the order data are fed into the memory of the computer.

In practice this is done as follows:

When calling for a certain quantity the corresponding quantity - as ordered by the retailer - is taken from the track on which the product is stored. This quantity is conveyed to the packing room where it is placed in crates or containers by hand or automatically.

When the maximum quantity for the crate or container is reached, a nearby printer will produce a print-out with information about the retailer, a retailer code or something similar to it, as well as information concerning the contents of said crate or container. The print-out is placed on or attached to the crate or container by the operator after the products have been placed in said crate or container, which are then transported to a place 13 in the dispatch hall reserved for the retailer in question.

In Fig. 2 the numeral 10 indicates the location of the crate or container supply; the numeral 11 indicates the operator who fills the crates or containers and the numeral 12 indicates the place to which the crates or containers are conveyed. The operator may of course be replaced by a full-automatic crate- or container filling device. The retailer places or stock places in the dispatch hall are indicated with the numeral 13.

Should various types of products be called for in succession, then the unloading means moves to the corresponding tracks and removes the required quantity after which it moves to another track containing another required product. This means that the ordered products are delivered to the packing room in the same sequence as the in-feed into the computer. In this way each product may be called for in any sequence when the buffer plant is filled. As a result, an optimum supply to the discharge place is attained and various products for the retailers are present during the dispatch phase.

However, in a bakery this is not possible at the beginning of the evening as not all the products have been produced yet at that time. At the beginning of the evening the crates and containers are filled with only one type of product. These are identified of course by an identical print-out stating the name of the retailer, etc. As a result, the work can already be done in the packing department during the production phase in which the products are not all present yet. This is of importance as it ensures a maximum packing time, which can restrict the required storage capacity to a minimum.

However, as all the production and order data are stored in the memory of the computer, errors are ruled out even if packing is started early. This generally has the advantage that the packing operator does not have to count or think. He merely has to place products into a crate or container until another print-out arrives, indicating that a certain quantity belongs in said crate or container. In this way the crates or containers may be filled half too, of course.

The baked products are conveyed back to the buffer plant 7 via a return track 14 and the loading means 6 after possible further processing, e.g. cutting and/or packing. By way of example Fig. 2 shows the supply 15 from a packing machine to the return track 14 and the supply 16 from a cutting machine. The return track 14 is connected to the central collecting track 4 by a switch 17. In this way cut and/or packed products may be stored in the buffer plant 7, sorted or otherwise, which enables to collect the products ordered by the retailer quickly and efficiently after receipt of their orders.

An additional advantage of the combined cooling-down/storage plant is that, because the supply to and the discharge from the plant are not directly related to one another, the cooling time can be varied in accordance with each individual product. If a product requires a cooling time of at least an hour, for instance, this information is fed into the computer. That track then remains blocked during the first hour as far as discharge is concerned. As a result the required cooling time is always attained.

Another result is that it is possible to leave certain products requiring a much longer cooling time - products like Weihnachts currant loaves - in the plant for a longer period. Herewith a much longer cooling time can be obtained, provided that the maximum buffer capacity is not exceeded. At the same time the advantage can be put to use to realize a longer cooling time - which permits better cutting - when packing critical products.

When packing, another advantage emerges, namely that it is not necessary to switch over to a second packing machine while the paper of the first packing machine is being changed, as is the case with the conventional cooling tracks. The products conveyed from the buffer plant to the packing machine may simply be blocked, while the supply of products may continue. Certain capacity conditions may allow for the purchase of only one packing machine. In any case a stand-in machine is not necessary if this plant is only used to bridge over the phases during which the paper is changed.

In the above-described plant the buffer 7 works according to the "first-in", "first-out" system. This does not present any objections provided that each type has the disposal of a track of its own. However, should a large variety of products be produced with a small total amount, it would not be rational to block a complete track having a capacity of 170 loaves at the most for merely 10 loaves, for example. This would considerably increase the required capacity of the buffer.

In such a case it is advisable to choose a construction allowing to place the products in any desired sequence before they are packed. To this end the entire top level is reserved.

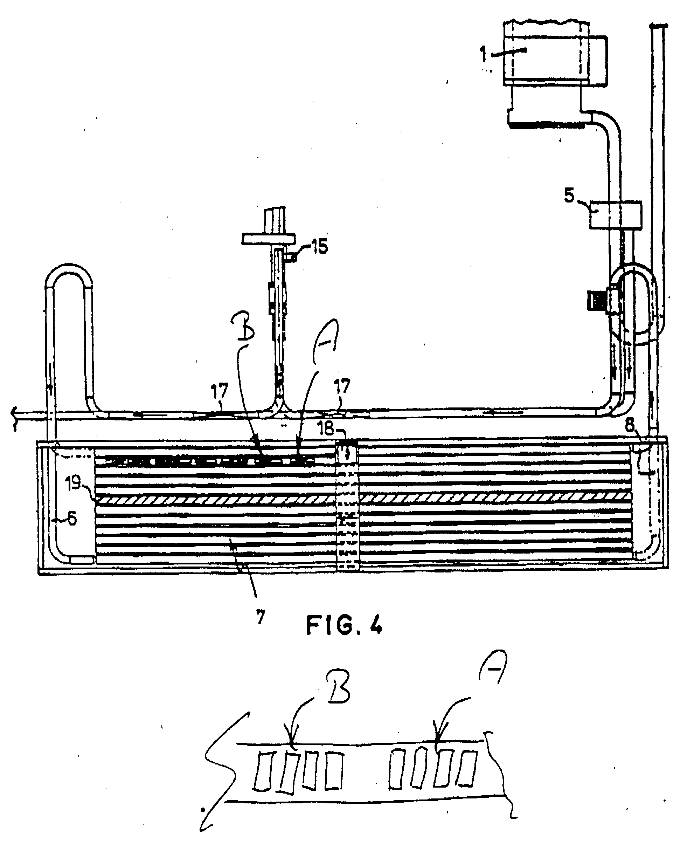

The sorting device 18, shown in Fig. 4, functions as follows:
the produced loaves of bread are deposited onto one of the tracks via the depanner 5 and the loading means 6, while the computer remembers the selected track and the quantity. However, in contrast with the device according to Fig.2, another track is not chosen when the following type of low quantity is conveyed. Instead, a certain space is created between the last loaf of bread of type A and the first loaf of type B. In practice various types of bread are conveyed after one another, of which the amounts and positions are known to the control computer.

By means of the mobile sorting device 18 (with a small grab head) that is placed over the entire top level, it is now possible to reach each position on the top level, to remove the required quantity of bread and to place it on a collecting track 19. As soon as the required quantity of the various types has been reached, this datum is passed on to the computer and, in the following unloading cycle, the unloading means 8 can remove the products in the known sequence.

As this function works independently of the loading means 6 and the unloading means 8, no delay will occur during packing owing to the slower operation of the sorting device.

As appears from the above, this buffer plant can also fully replace a cooling track, and in such a way that a very compact cooler is obtained that can be placed in practically every open space, although it would naturally be an advantage if the necessary length is available. As a result, the plant is relatively cheap. The plant may also be very well suspended.

Summarizing it can be said that the following points should be considered when calculating the total cost:

a) the operator, assigned to packing the products, is able to work as efficiently as possible;
b) there are no peaks during packing that would require extra staff for a short time, which means that the productivity may be increased by an essential factor,
c) no extra cooling tracks are required, for the baked products may be transported from the depanner directly to a storage plant,
d) a variable cooler is available,
e) less cutting machines are necessary under certain circumstances,
f) if failures should occur at the entrance of the plant, for example in the part accomodating the individual packing machine, the normal work may continue without the supply being seriously hindered, which means that removing by hand etc. is no longer necessary, and
g) the uniform, continuous discharge of products allows to automatize the packing activities as much as possible.

Although the structure and functioning of the above system have been elucidated on the basis of the manufacture of bakery products, it is clear that the system can be applied when manufacturing baked products in general. In this connection one may think of the baking of all kinds of ceramic materials (bricks, roofing tiles, tiles, earthenware etc.), the hardening of sand-lime and concrete products in autoclaves, the pre-baking and preserving of all kinds of food products etc.

**Claims**

1. Equipment for cooling and mechanically conveying baked products between at least one oven (1, 2) and a location (10) where the products are packed in a crate or similar container, comprising a central collecting track (4), a loading means (6) adapted to transfer the products from the exit of the central collecting track to a buffer plant (7), and an unloading means (8) adapted to transfer the products to other processing equipment, adapted to transfer the products to a location (10) where they are to be packed or wrapped, **characterized in that** the buffer plant (7) comprises a plurality of cooling and storage tracks lying next to and above one another and extending parallel to one another, in that the loading means (6) and the unloading means (8) are each movable to a selected one of the cooling and storage tracks of the buffer plant (7), in that a return track (14), including switches (9, 17) at both ends, is provided between the exit of the unloading means (8) and the entrance of the loading means (6), and in that positions of the loading means and the unloading means as well the positions of switches (9, 17) of a return track (14) are controlled by a computer which is adapted to process input data concerning the quantities and characteristics of each type of product to be delivered per retailer, said characteristics being not only related to cooling inside the buffer plant (7) but also to cutting (16) and individual packing (15) along the return track (14).

**2.** Equipment as in claim 1, **characterized in that** a sorting device (18) is provided above the top level of the buffer plant (7) to transfer low quantity products to a collecting track (19).

**Revendications**

**1.** Equipement pour refroidir et transporter mécaniquement des produits cuits entre au moins un four (1, 2) et un emplacement (10) où les produits sont groupés dans une caisse ou un conteneur similaire, équipement comportant une voie centrale de collecte (4), des moyens de chargement (6) conçus pour transférer des produits, depuis la sortie de la voie centrale de collecte, à une installation de stockage (7), et des moyens de déchargement (8) conçus pour transférer les produits à un autre équipement de traitement, conçu pour transférer les produits à un emplacement (10) où ils doivent être emballés ou enveloppés, équipement caractérisé par le fait que l'installation de stockage (7) comporte une pluralité de voies de refroidissement et de stockage situées l'une près de l'autre et au-dessus l'une de l'autre et s'étendant parallèlement l'une à l'autre, par le fait que les moyens de chargement (6) et les moyens de déchargement (8) peuvent, chacun, se déplacer pour atteindre l'une, sélectionnée, des voies de refroidissement et de stockage de l'installation de stockage (7), par le fait qu'une voie de retour (14) comporte des aiguillages (9, 17) aux deux extrémités, qu'elle est prévue entre la sortie des moyens de déchargement (8) et l'entrée des moyens de chargement (6), et par le fait que les positions des moyens de chargement et des moyens de déchargement ainsi que les positions des aiguillages (9, 17) d'une voie de retour (14) sont commandées par un ordinateur qui est conçu pour traiter les données d'entrée concernant les quantités et les caractéristiques de chaque type de produit à fournir par détaillant, lesdites caractéristiques ne se rapportant pas seulement au refroidissement à l'intérieur de l'installation de stockage (7), mais également à la coupe (16) et à l'emballage individuel (15) le long de la voie de retour (14).

**2.** Equipement comme dans la revendication 1, caractérisé par le fait qu'au-dessus du niveau supérieur de l'installation de stockage (4) est prévu un dispositif de tri (18) pour transférer les produits fabriqués en faible quantité à une voie de collecte (19).

**Patentansprüche**

**1.** Vorrichtung zum Kühlen und mechanischen Befördern von Backerzeugnissen zwischen mindestens einem Ofen (1, 2) und einer Stelle (10), an der die Erzeugnisse in eine Kiste oder einen ähnlichen Behälter gepackt werden, mit einer zentralen Sammelbahn (4), einer Ladeeinrichtung (6), die geeignet ist zum Übertragen der Erzeugnisse von dem Ausgang der zentralen Sammelbahn zu einer Speicheranlage (7) und einer Entladeeinrichtung (8), die geeignet ist, die Erzeugnisse zu einer anderen Verarbeitungseinrichtung zu übertragen, die geeignet ist, die Erzeugnisse zu einer Stelle (10) zu übertragen, an der sie verpackt oder eingepackt werden, **dadurch gekennzeichnet,** daß die Speicheranlage (7) mehrere Kühl- und Speicherbahnen aufweist, die nebeneinander und übereinander liegen und sich im wesentlichen parallel zueinander erstrecken, daß die Ladeeinrichtung (6) und die Entladeeinrichtung (8) jeweils zu einer ausgewählten der Kühl- und Speicherbahnen der Speicheranlage (7) bewegbar sind, daß eine Rückkehrbahn (14), die an beiden Enden Schalter (9, 17) aufweist, zwischen dem Ausgang der Entladeeinrichtung (8) und dem Eingang der Ladeeinrichtung (6) vorgesehen ist, und daß die Positionen der Ladeeinrichtung und der Entladeeinrichtung wie auch die Positionen der Schalter (9, 17) der Rückkehrbahn (14) von einem Computer gesteuert werden, der geeignet ist, Eingangsdaten zu verarbeiten, die die Menge und Eigenschaften jedes an Wiederverkäufer zu liefernden Erzeugnistyps betreffen, wobei die Eigenschaften sich nicht nur auf das Kühlen im Innern der Speicheranlage (7) beziehen, sondern auch auf das Schneiden (16) und die individuelle Verpackung (15) entlang des Rückkehrwegs (14).

**2.** Vorrichtung nach Anspruch 1, **dadurch gekennzeichnet**, daß eine Sortiervorrichtung (18) über der Oberseite der Speicheranlage (7) vorgesehen ist, so daß kleine Mengen von Erzeugnissen zu einer Sammelbahn (19) übertragen werden.

FIG.1

FIG. 2

FIG. 3

FIG. 4